# EUROPÄISCHE PATENTSCHRIFT

(11) **EP 1 835 174 B1**
(45) Veröffentlichungstag und Bekanntmachung des Hinweises auf die Patenterteilung: **24.06.2009**
(21) Anmeldenummer: 07002491.4
(22) Anmeldetag: 06.02.2007
(51) Int. Cl.: F03D 7/02

(54) **Steuervorrichtung zur Rotorblattverstellung**
Control device for rotor blade adjustment
Dispositif de commande destiné au réglage d'une pale de rotor

(30) Priorität: 14.03.2006 DE 102006012008
(43) Veröffentlichungstag der Anmeldung: 19.09.2007
(73) Patentinhaber: Robert Bosch GmbH, 70184 Stuttgart (DE)
(72) Erfinder: Schmidt, Stefan, 97816 Lohr am Main (DE)
(74) Vertreter: Thürer, Andreas

(56) Entgegenhaltungen:
- EP-A- 1 283 370
- DE-U1- 20 212 459
- DE-U1- 20 215 838
- DE-U1- 20 317 749
- FR-A1- 2 748 296
- US-A- 5 415 076

## Beschreibung

Die vorliegende Erfindung betrifft eine elektrohydraulische Steuervorrichtung zur Rotorblattverstellung einer Windkraftanlage entsprechend dem Oberbegriff von Anspruch 1.

Eine derartige elektrohydraulische Steuervorrichtung ist aus der Gebraüchsmusterschrift DE 203 17 749 bekannt. Rotorblätter bei Windkraftanlagen sind innerhalb eines vorbestimmten Winkelbereiches,um eine Rotorblattachse verstellbar, damit das Rotorblatt in den Wind gestellt werden kann (pitching-out) oder mit Bezug zur Windrichtung angestellt werden kann (pitching-in). Da Rotorblätter sehr teuer und empfindlich sind, ist eine Rotorblattverstellung aufgrund der insbesondere bei Starkwind herrschenden großen Kräfte feinfühlig und ohne abrupte Verzögerung und Beschleunigung vorzunehmen. Die Rotorblattverstellung erfolgt hydraulisch über ein Hydraulikzylinder mit einer kolbenseitigen Kammer und einer kolbenstangenseitigen Kammer. Eine Druckleitung steht in ständiger Druckmittelverbindung mit der kolbenstangenseitigen Kammer. Die kolbenstangenseitigen Kammer ist über ein Proportionalsitzventil mit der kolbenseitigen Kammer verbunden. Die kolbenseitige Kammer ist über ein weiteres Proportionalsitzventil zu einem Tank hin entlastbar. Um bei dieser Lösung eine hohe Ausfallsicherung zu erreichen, ist auf Grund der dafür erforderlichen Zusatzventile ein hoher Geräteaufwand notwendig, womit ein komplizierter Aufbau und hohe Kosten verbunden sind.

Die französische Patentschrift FR 2 748 296 A1 zeigt ein pneumatisches Blattverstellsystem für eine Windkraftanlage. Ein doppelt wirkender pneumatischer Zylinder wird mit Hilfe von vier Schaltventilen verfahren. Betrachtet man die Bodenseite des Zylinders, so ist hier jeweils ein einzelnes Schaltventil für den Zulauf von Druckluft und ein einzelnes Schaltventil für den Ablauf von Druckluft vorhanden.

Das deutsche Gebrauchsmuster DE 203 17 749 U1, zeigt eine hydraulische Steuerung für den Stellzylinder eines Blattverstellantriebs. In den einzelnen Zulauf- bzw. Ablaufleitungen, die zur Ansteuerung des Hydrozylinders verwendet werden, ist jeweils zumindest ein Proportionalventil vorhanden. Es wird vorgeschlagen, das Proportionalventil für die Notfahrt durch ein parallel geschaltetes Schaltventil zu überbrückten.

Die Aufgabe der vorliegenden Erfindung besteht darin, eine elektrohydraulische Steuervorrichtung mit einem einfachen Aufbau einer sicheren Lagerregelung und gutem Fail-safe-Verhalten zu schaffen.

Diese Aufgabe wird durch die elektrohydraulische Steuervorrichtung gemäß Anspruch 1 gelöst.

Die erfindungsgemäße elektrohydraulische Steuervorrichtung dient zur Rotorblattverstellung einer Windkraftanlage über einen Hydraulikzylinder. Der Hydraulikzylinder hat eine kolbenseitige und eine kolbenstangenseitige Kammer. Über eine zulaufseitige Ventilanordnung ist eine Druckmittelverbindung zwischen Pumpe und kolbenseitiger Kammer einstellbar, während über eine ablaufseitige Ventilanordnung eine Druckmittelverbindung zwischen kolbenseitiger Kammer und Tank einstellbar ist. Jede Ventilanordnung weist jeweils zumindest zwei parallel geschaltete Schaltventile mit vorzugsweise unterschiedlichem maximalen Durchflussvolumenstrom auf, die in Form einer Digitalhydräulik in unterschiedlichen Kombinationen schaltbar sind, um unterschiedliche Volumenströme einzustellen und eine gewünschte Position des Hydraulikzylinders und damit den Pitchwinkel einzustellen. Mit dieser Steuervorrichtung lassen sich die Anforderungen an die Steuervorrichtung wie genaue Lageregelung und günstiges Faile-safe-Verhalten kostengünstig abbilden. Durch die Schaltventile ist ein robuster und einfacher Aufbau möglich. Die elektrohydraulische Steuervorrichtung kann auch betrieben werden, wenn nur ein Schaltventil je Ventilanordnung vorliegt.

Die Schaltventile sind bevorzugt Sitzventile aufgrund ihrer leckagefreien Absperrung.

Vorzugsweise unterscheidet sich der schaltbare Volumenstrom benachbarter Schaltventile einer Ventilanordnung vorzugsweise um dem Faktor zwei, so dass eine schrittweise Erhöhung des Volumenstroms mit gleichen Schrittweiten möglich ist. Beispielsweise sind auch Faktoren von größer als 2 möglich.

Durch eine Druckmittelverbindung zwischen der Pumpe stromaufwärts der zulaufseitigen Ventilanordnung und der kolbenstangenseitigen Kammer wird eine Regenerativschaltung geschaffen, durch die Druckmittel aus der kolbenseitigen Kammer zur kolbenstangenseitigen Kammer rückführbar ist.

In einer bevorzugten Ausführungsform hat die zulaufseitige Ventilanordnung und/oder die ablaufseitige Ventilanordnung jeweils drei parallel geschaltete Schaltventile. Damit lässt sich der Volumenstrom in 7 Stufen einstellen, wobei die Sperrstellung (Q=0) die achte Stellung darstellt.

In einer weiteren Ausführungsform hat die zulaufseitige Ventilanordnung und/oder die ablaufseitige Ventilanordnung jeweils vier parallel geschaltete Schaltventile. Damit lässt sich der Volumenstrom in 15 Stufen einstellen, wobei die Sperrstellung (Q=0) die sechszehnte Stellung, darstellt.

Es wird eine Ansteuerung der Schaltventile über einen Pulsweiten modulierten Ausgangsstrom bevorzugt, um die Schaltzeit der Ventile und die Regelgüte der Achse zu optimieren. Dabei eignet sich ein Feldbus zur Pulsweitenmodulation der Schaltausgänge, da der Feldbus-Controller die notwendige Hard- und Software für die Pulsweitenmodulation bereithält.

Es wird bevorzugt, dass der Feldbus ein CAN-Bus ist, wodurch ein weit verbreitetes asynchrones, serielles Bussystem mit kostengünstigen Komponenten nutzbar ist.

Erfindungsgemäße Weiterbildungen sind Gegenstand der Unteransprüche.

Nachfolgend wird die vorliegende Erfindung anhand der schematischen Zeichnungen beschrieben. Es zeigen:
Fig. 1 eine Rotorblattverstelleinrichung mit einer elektrohydraulischen Steuervorrichtung entsprechend dem ersten Ausführungsbeispiel,
Fig. 2 eine Rotorblattverstelleinrichung mit einer elektrohydraulischen Steuervorrichtung entsprechend dem zweiten Ausführungsbeispiel und
Fig. 3 eine Rotorblattverstelleinrichung mit einer elektrohydraulischen Steuervorrichtung entsprechend dem dritten Ausführungsbeispiel..

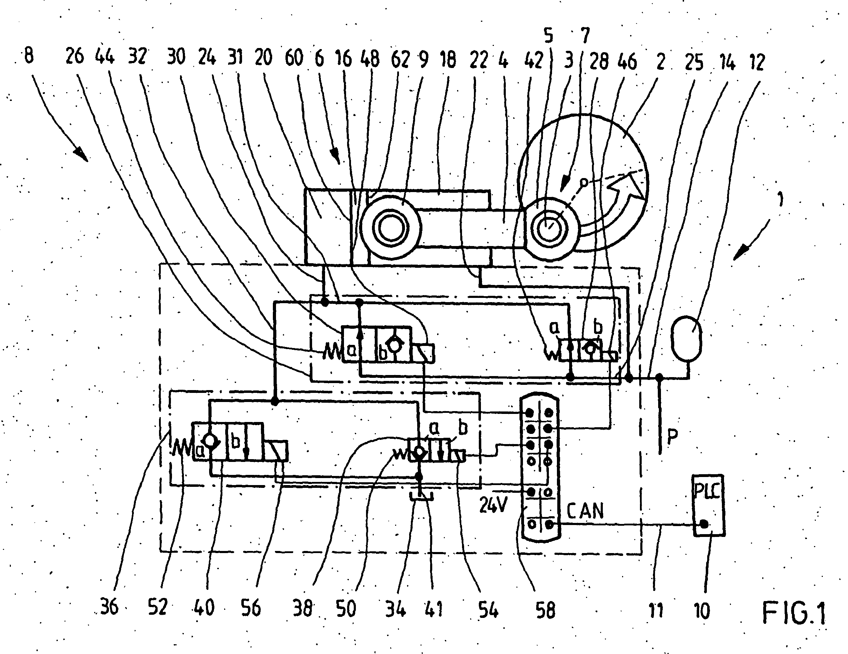

In der in Fig. 1 gezeigten Rotorblattverstelleinrichtung 1 ist ein Pitchwinkelverstellglied 2 vorgesehen, das auf ein nicht dargestelltes Rotorblatt wirkt, um dessen Pitchwinkel einzustellen. Das Pitchwinkelverstellglied 2 wird durch einen Hydraulikzylinder 6 angetrieben, dessen Kolbenstange 4 am Pitchwinkelverstellglied 2 angreift und mit diesem einen Kurbeltrieb bildet, so dass durch Ausund Einfahren der Kolbenstange 4 der Pitchwinkel einstellbar ist.

Der Hydraulikzylinder 6 wird hydraulisch über eine Steuervorrichtung 8 angesteuert, der ein elektrisches Steuersignal von einer programmierbaren Logiksteuereinrichtung (PLC=Programmable Logic Controller) über einen Feldbus zugeführt wird. Ferner wird der Steuervorrichtung 8 Druckmittel von einer nicht dargestellten Pumpe und einem Hydraulikspeicher 12 über eine Zulaufleitung 14 zugeführt.

Der Hydraulikzylinder 6 weist einen Kolben 16 auf, dessen Drehgelenk 7 mit dem Pitchwinkelverstellglied 2 verbunden ist. Der Kolben 16 unterteilt den Hydraulikzylinder in einen kolbenstangenseitigen Raum 18 und einen kolbenseitigen Raum 20 und ist über ein am Außenumfang angebrachtes Schwenklager 9 schwenkbar gelagert. Die Steuervorrichtung 8 ist mit dem kolbenstangenseitigen Raum 18 über eine Rücklaufleitung 22 und mit dem kolbenseitigen Raum 20 über eine Vorlaufleitung 24 verbunden.

Nachfolgend wird der Aufbau der Steuervorrichtung 8 beschrieben.

Die Zulaufleitung 14 verzweigt in die Rücklaufleitung 22 und eine Verbindungsleitung 25, die zu den Eingängen von Schaltventilen 28, 30 einer Zulauf-Ventilgruppe 26 führt. Die Schaltventile 28, 30 der Zulauf-Ventilgruppe 26 sind zwei parallel geschaltete 2/2-Schaltventile mit Magnetbetätigung. Beide Schaltventile 28, 30 werden durch eine jeweilige Feder 42, 44 in ihre geöffnete Schaltstellung a vorgespannt. Durch Betätigung des jeweiligen Magneten 46, 48 gelangen die Schaltventile 28, 30 in ihren geschlossenen Schaltstellungen b. Das Schaltventil 28 der Zulauf-Ventilgruppe 26 hat einen geringen maximalen Durchflussvolumenstrom, während das Schaltventil 30 der Zulauf-Ventilgruppe 26 einen großen maximalen Durchflussvolumenstrom (größere Nennweite) aufweist. Der Ausgang der parallel geschalteten Schaltventile 28, 30 ist über eine Arbeitsleitung 31 an die zum kolbenseitigen Raum 20 des Hydraulikzylinders 6 führende Vorlaufleitung 24 angeschlossen.

Von der Vorlaufleitung 24 zweigt eine Ablaufleitung 32 ab, die zu den Eingängen von zwei Schaltventilen 38, 40 einer Ablaufventilgruppe 36 führt. Die Schaltventile 38, 40 der Ablauf-Ventilgruppe 36 sind ebenfalls 2/2-Schaltventile, die durch eine zugeordnete Feder 50, 52 in die geschlossene Schaltstellung a vorgespannt sind. Durch Betätigung des jeweiligen Magneten 54, 56 gelangen die Schaltventile 38, 40 in ihren geöffneten Schaltstellungen b. Das Schaltventil 38 der Zulauf-Ventilgruppe 36 hat einen geringen maximalen Durchflussvolumenstrom, während das Schaltventil 40 der Zulauf-Ventilgruppe 36 einen gro-βen maximalen Durchflussvolumenstrom (größere Nennweite) aufweist. Der Ausgang der parallel geschalteten Schaltventile 38, 40 führt über eine Tankleitung 41 zu dem Tank 34.

Die Magnete 46, 48 der Zulauf-Ventilgruppe 26 und die Magnete 54, 56 der Ablauf-Ventilgruppe 36 stehen mit ei' ner Magnetsteuerung 58 in elektrischer Verbindung, der über den Feldbus 11 elektrische Signale von der programmierbaren Logiksteuereinrichtung 10 zuführbar sind.

Nachfolgend wird die Funktion der elektrohydraulischen, Steuerungsvorrichtung 8 entsprechend der ersten Ausführungsbeispiel unter Bezugnahme auf Fig. 1 erläutert.

Das-grundlegende Prinzip der Digitalhydraulik ist in der WO 02/086327 A1 dargestellt.

Die Zulauf-Ventilgruppe 26 und die Ablauf- Ventilgruppe 36 stellen jeweils ein Element einer Digitalhydraulik dar. Dabei unterscheiden sich die maximalen Durchflussvolumenströme der Schaltventile 28, 30 der Zulauf-Ventilgruppe bei einer bestimmten Druckdifferenz über dem jeweiligen Ventil um den Faktor 2. Dabei ergibt sich bei einer entsprechenden Ansteuerung der Schaltventile 28, 30 eine jeweilige Volumenstromstufe entsprechend der nachfolgenden Tabelle 1.

| Stellung von Schaltventil 30 | Stellung von Schaltventil 28 | Volumenstrom *) |
|---|---|---|
| b | b | 0 |
| b | a | 1 |
| a | b | 2 |
| a | a | 3 |

| | | |
|---|---|---|
| *) normiert mit dem maximalen Durchfluss des kleinsten Ventils | | |

Auch bei den Schaltventilen 38, 40,der Ablaufventilgruppe 36 liegt dieses Verhältnis von 1, zu 2 von den maximalen Durchflussvolumenströmen bei einer bestimmten Druckdifferenz über den Ventil vor, so dass sich entsprechende Volumenströme zum Tank 34 einstellen lassen.

Nachfolgend wird die Funktionsweise der Rotorblattverstelleinrichtung 1 entsprechend Fig. 1 beschrieben. Dabei wird von der Annahme ausgegangen, dass bei eingefahrenem Kolben 16 die Rotorblätter mit Bezug zur Windrichtung angestellt sind, d.h. in den Wind gestellt sind, während beim ausgefahrenen Kolben 16 die Rotorblätter aus dem Wind gestellt sind ("Fahnenstellung").

In der Grundstellung sind die Magneten 46, 48 der Schaltventile 28, 30 der Zulauf-Ventilgruppe 26 bestromt, so dass die Schaltventile 28, 30 in ihre geschlossene Schaltstellung b gebracht sind. Die Magneten 54, 56 der Schaltventile 38, 40 der Ablauf-Ventilgruppe 36 sind nicht bestromt, so dass die Schaltventile 38, 40 in ihre geschlossene Schaltstellung a gebracht sind. Der Pumpendruck liegt über die Zulaufleitung 14 und die Rücklaufleitung 22 im kolbenstangenseitigen Raum 18 an. In dieser Grundstellung ist der Hydraulikzylinder 6 hydraulisch blockiert und entsprechend dem Pitchwinkel festgelegt.

Wenn ein Ausfahren des Hydraulikzylinder 6 gewünscht wird, um das Rotorblatt aus dem Wind zu stellen, so werden die Magneten 46, 48 der Schaltventile 28, 30 bestromt, um zumindest eines der Schaltventile 28, 30 in die geöffnete Schaltstellung a zu bringen. Dabei richtet sich die Art und Weise die Bestromung der Schaltventile 28, 30 nach dem gewünschten Volumenstrom, der von der Zulaufleitung 14 zur Vorlaufleitung 24 gefördert werden soll, wie es in der vorstehenden Tabelle 1 wiedergegeben ist. Das Ausfahren des Hydraulikzylinders 6 wird aufgrund der Druckmittelverbindung zwischen dem kolbenstangenseitigen Raum 18 und dem kolbenseitigen Raum 20 und aufgrund der Flächendifferenz zwischen der zum kolbenseitigen Raum 20 weisenden Zylinderfläche 60 am Kolben 16 und der zum kolbenstangenseitigen Raum 18 weisenden Ringfläche 62 am Kolben 16 bewirkt.

Wenn aus einer der ausgefahrenen Positionen des Kolbens 16 ein Einfahren des Hydraulikzylinders 6 gewünscht wird, so werden die Schaltventile 28, 30 über eine entsprechende Bestromung der Magnete 46, 48 in ihrer Grundstellung b, in der eine Absperrung der Druckmittelverbindung zuwischen der Zulaufleitung 14 und der Vorlaufleitung 24 vorliegt, belassen. Im kolbenstangenseitigen Raum 18 liegt der Druck in der Zülaufleitung 14 oder im Hydraulikspeicher 12 an. Die Magnete 54, 56 der Schaltventile 38, 40 werden entsprechend dem gewünschten Einfahrverhalten bestromt, so dass sich eine Druckmittelverbindung zwischen der Ablaufleitung 32 und der Tankleitung 41 öffnet und Druckmittel von der aus dem kolbenseitigen Raum 20 zum Tank 34 abströmen kann.

Wenn die gewünschte Position des Kolbens 16 sowohl nach einer Einfahrbewegung als auch nach einer Ausfahrbewegung erreicht ist, werden die Schaltventile der Zulauf-ventilgruppe 26 und der Ablauf-Ventilgruppe, 36 in ihre Grundstellung gebracht, d.h. die Schaltventile 28, 30 in die Schaltposition b und die Schaltventile 38, 40 in die Schaltposition a. Damit ist die kolbenseitigen Raum hydraulisch blockiert, so dass die Bewegung des Kolbens 16 im Hydraulikzylinder 6 gestoppt werden kann.

Die elektrische Ansteuerung der Magnete 46, 48 der Zulauf-Ventilgruppe 26 und der Magnete 54, 56 der Ablaufventilgruppe 36 erfolgt über eine Magnetsteuerung, die Signale über einen Feldbus 11, vorzugsweise einen CAN-Bus, von der programmierbaren Logiksteuereinrichtung 10 aufnimmt. Eine Pulsweiten modulierte Ansteuerung wird dabei bevorzugt.

Sowohl das Pitchwinkelverstellglied 2, als auch die Kolbenstange 4, der Hydraulikzylinder 6, der Speicher 12 und die elektrohydraulische Steuervorrichtung 8 sind vorzugsweise im Rotor der Windkraftanlage angeordnet, wobei dem Rotor lediglich der Pumpendruck P zugeführt und Druckmittel über die Ablaufleitung 32 zum Tank 34 hin entnommen werden muss. Die Magnetsteuerung 58 kann sich entweder im Rotor der Windkraftanlage befinden, oder die Steuersignale zu den Magneten 46, 48, 54, 56 werden von einer Magnetsteuerung in der Turmdrehegondel außerhalb des Rotors 5 zugeführt.

Durch die Grundstellung des Schaltventils 28, 30 in die geschlossene Schaltposition b wird sichergestellt, dass die Schaltventile 28, 30 bei einem Ausfall der elektrischen Spannungsversorgung mit Hilfe der Federn 42, 44 in die geöffnete Schaltstellung a gebracht werden, in denen eine Druckmittelverbindung zwischen der Zulaufleitung 14 und der Vorlaufleitung 24 aufgesteuert wird. Die Schaltventile 38, 40 befinden sich in der Schaltstellung a, so dass das Druckmittel aus dem kolbenseitigen Raum 20 zum Tank 34 nicht abströmen kann. Auf Grund einer Druckmittelzufuhr aus dem Hydraulikspeicher 12 zum kolbenseitigen Raum 20 erfolgt ein Ausfahren des Kolbens 16 und somit ein Drehen aus dem Wind ("Fahnenstellung"). Damit lässt sich ein gutes Fail-safe-Verhalten absichern.

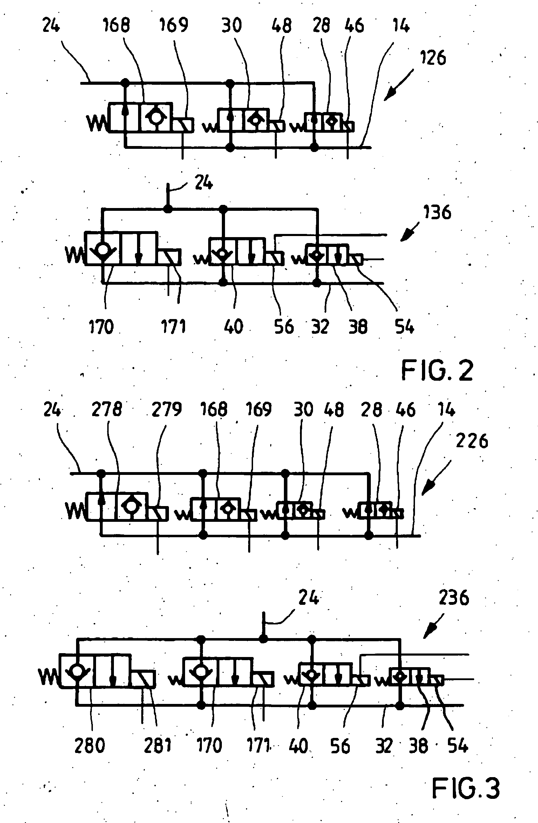

Fig. 2 zeigt eine Zulauf-Ventilgruppe 126 und eine Ablauf-Ventilgruppe 136 einer elektrohydraulischen Steuervorrichtung entsprechend dem zweiten Ausführungsbeispiel. Bis auf diese Ventilbaugruppen 126, 136 entspricht die elektrohydraulische Steuervorrichtung des zweiten Ausführungsbeispiels der des ersten Ausführungsbeispiels, so dass sich in der Struktur auf Fig. 1 verwiesen wird.

Im Unterschied zur Zulauf-Ventilgruppe 26 des ersten Ausführungsbeispiels hat die Zulauf-Ventilgruppe 126 des zweiten Ausführungsbeispiels zusätzlich zu den Schaltventilen 28 und 30 parallel zu diesen ein Schaltventil 168, das über einen Magneten 16,9 mit der Magnetsteuerung 58 verbunden ist. Der durch das Schaltventil 168 schaltbare maximale Durchflussvolumenstrom bei einer vorgegebenen Druckdifferenz über dem Ventil beträgt entsprechend der nachfolgenden Tabelle 2:

| Stellung von Schaltventil 168 | Stellung von Schaltventil 30 | Stellung von Schaltventil 28 | Volumenstromstufe *) |
|---|---|---|---|
| b | b | b | 0 |
| b | b | a | 1 |
| b | a | b | 2 |
| b | a | a | 3 |
| a | b | b | 4 |
| a | b | a | 5 |
| a | a | b | 6 |
| a | a | a | 7 |

| | | | |
|---|---|---|---|
| *) normiert mit dem maximalen Durchfluss des kleinsten Ventils | | | |

Wie aus dieser Tabelle ersichtlich ist, lässt sich in Abhängigkeit vom geschalteten Ventil 28, 30, 168 ein maximaler Durchflussvolumenstrom im Bereich von Stufe 0 bis 7 normiert mit dem maximalen Durchfluss des kleinsten Ventils bei einer Erhöhung um jeweils eine Stufe erzielen.

Auch bei der Ablauf-Ventilgruppe 136 des zweiten Ausführungsbeispiels ist zusätzlich zu den Schaltventilen 38, 40 ein das über einen Magneten 171 durch die Magnetsteuerung 58 ansteuerbares Schaltventil 170 parallel geschaltet. Der maximale schaltbare Durchflussvolumenstrom beim zweiten Ausführungsbeispiel entspricht dem vorstehend in der Tabelle gezeigten Volumenstrom der Zulaufventilgruppe 126, wobei jedoch die Schaltstellungen a und b vertauscht sind.

Mit der elektrohydraulischen Steuervorrichtung des zweiten Ausführungsbeispiels ist eine feinfühligere Pitchwinkelverstellung aufgrund der Ausfahrbewegung bzw. Einfahrbewegung des Kolbens 16 möglich.

Fig. 3 zeigt eine elektrohydraulische Steuervorrichtung entsprechend dem dritten Ausführungsbeispiel, in dem eine Zulauf-Ventilgruppe 226 zusätzlich zu den Schaltventilen 28, 30 und 168 des zweiten Ausführungsbeispiels ein weiteres parallel geschaltetes Schaltventil 278 aufweist und die Ablauf-Ventilgruppe 236 zusätzlich zu den Schaltventilen 38, 40 und 170 der Ablauf-Ventilgruppe 136 des zweiten Ausführungsbeispiels ein parallel geschaltetes Schaltventil 280 aufweist. Die Schaltventile 278, 280 werden durch einen jeweiligen Magneten 279, 281 betätigt.

Das Schaltventil 278 und das Schaltventil 280 sind vorzugsweise in einer solchen Weise ausgelegt, dass bei einer vorgegebenen Druckdifferenz über den jeweiligen Ventil ein maximaler Durchflussvolumenstrom entsprechend der nachfolgenden Tabelle 4 schaltbar ist:

| Ventil 170 | Ventil 168 | Ventil 30 | Ventil 28 | Volumenstromstufe |
|---|---|---|---|---|
| b | b | b | b | 0 |
| b | b | b | a | 1 |
| b | b | a | b | 2 |
| b | b | a | a | 3 |
| b | a | b | b | 4 |
| b | a | b | a | 5 |
| b | a | a | b | 6 |
| b | a | a | a | 7 |
| a | b | b | b | 8 |
| a | b | b | a | 9 |
| a | b | a | b | 10 |
| a | b | a | a | 11 |
| a | a | b | b | 12 |
| a | a | b | a | 13 |
| a | a | a | b | 14 |
| a | a | a | a | 15 |

Die Schaltventile 168 und 278 der Zulauf-Ventilgruppe 126, 226 sind durch eine zugeordnete Feder in die Öffnungsposition vorgespannt. Ebenfalls in gleicher Weise wie die Schaltventile 28, 30 sind die Schaltventile 168, 278 in der Grundstellung durch die Magneten 169, 279 in die geschlossene Stellung geschaltet.

In gleicher Weise wie die Schaltventile 38, 40 der Ablauf-Ventilgruppe 136, 236 sind die Schaltventile 170, 280 in der Grundstellung durch eine zugeordnete Feder in die geschlossene Stellung vorgespannt.

Die Anzahl der Schaltventile in den Ventilgruppen ist nicht auf 2, 3 oder 4 entsprechend dem ersten bis dritten Ausführungsbeispiel beschränkt, sondern es kann eine beliebige Anzahl weiterer Schaltventile zu der jeweiligen Ventilgruppe hinzugefügt werden, um eine feinere Abstufung des Volumenstroms im Zulauf und im Ablauf vorzusehen. In Bezug auf die Digitalhydraulik wird auf die Schaltungen in der Patentanmeldung WO 02/086327 A1 verwiesen.

Ferner muss die Anzahl der Schaltventile in der Zulauf-Ventilgruppe nicht gleich der Anzahl der Schaltventile in der Ablauf-Ventilgruppe sein. Statt dessen kann eine beliebige Anzahl.an Schaltventilen in jeder Ventilgruppe vorgesehen sein, sofern deren Anzahl zumindest zwei Schaltventile je Ventilgruppe beträgt. Auf diese Weise kann gewünschten Unterschieden bei der Abstufung der Volumenströme im Zulauf und im Ablauf Rechnung getragen werden.

Mit den elektrohydraulischen Steuervorrichtungen des zweiten und dritten Ausführungsbeispiels lässt sich eine genaue Lageregelung des Rotorblattes bei einem guten Fail-safe-Verhalten kostengünstig umsetzen.

Die Erfindung betrifft eine elektrohydraulische Steuervorrichtung zur Rotorblattverstellung einer Windkraftanlage über einen Hydraulikzylinder. Der Hydraulikzylinder hat eine kolbenseitige und eine kolbenstangenseitige Kammer. Über eine zulaufseitige Ventilanordnung ist eine Druckmittelverbindung zwischen Pumpe und kolbenseitiger Kammer einstellbar während über eine ablaufseitige Ventilanordnung eine Druckmittelverbindung zwischen kolbenseitiger,Kammer und Tank einstellbar ist. Jeder,Ventilan-, ordnung weist jeweils zumindest zwei parallel geschaltete Schaltventile auf, die in unterschiedlichen Kombinationen öffnen und schließbar sind, um eine gewünschte Position des Hydraulikzylinders einzustellen. Diese Steuervorrichtung ermöglicht eine genaue Regelung des Rotorblatts.

### Bezugszeichenliste

- 1: Rotorblatt-Verstelleinrichtung
- 2: Pitchwinkelverstellglied
- 4: Kolbenstange
- 6: Hydraulikzylinder
- 7: Drehgelenk
- 8: Steuervorrichtung
- 9: Schwenklager
- 10: PLC
- 11: Feldbus
- 12: Hydraulikspeicher
- 14: Zulaufleitung
- 16: Kolben
- 18: kolbenstangenseitiger Raum
- 20: kolbenseitiger Raum
- 22: Rücklaufleitung
- 24: Vorlaufleitung
- 25: Verbindungsleitung
- 26: Zulauf-Ventilgruppe
- 28: Schaltventil
- 30: Schaltventil
- 31: Arbeitsleitung
- 32: Ablaufleitung
- 34: Tank
- 36: Ablauf-Ventilgruppe
- 38: Schaltventil
- 40: Schaltvenitl
- 41: Tankleitung
- 42: Feder
- 44: Feder
- 46: Magnet
- 48: Magnet
- 50: Feder
- 52: Feder
- 54: Magnet
- 56: Magnet
- 58: Magnetsteuerung
- 60: Zylinderfläche
- 62: Ringfläche
- 168: Schaltventil
- 169: Magnet
- 170: Schaltventil
- 171: Magnet
- 278: Schaltventil
- 279: Magnet
- 280: Schaltventil
- 281: Magnet

## Patentansprüche

1. Elektrohydraulische Steuervorrichtung (8) zur Rotorblattverstellung einer Hlindkraftanlage über einen Hydraulikzylinder (6) mit kolbenseitiger und kolbenstangenseitiger Kammer (20, 18),
mit einer zulaufseitigen Ventilanordnung (26, 126, 226), über die eine Druckmittelverbindung zwischen einer Pumpe und der kolbenseitigen Kammer (20) einstellbar ist,
mit einer ablaufseitigen Ventilanordnung (36, 136, 236), über die eine Druckmittelverbindung zwischen der kolbenseitigen Kammer (20) und einem Tank (34) einstellbar ist,
**dadurch gekennzeichnet, dass**
die zulaufseitige Ventilanordnung zumindest zwei parallel geschaltete Schaltventile (28, 30) aufweist und die ablaufseitige Ventilanordnung zumindest zwei parallel geschaltete Schaltventile (38, 40) aufweist und die zumindest vier Schaltventile in unterschiedlichen Kombinationen ansteuerbar sind, um eine gewünschte Position des Hydraulikzylinders (6) einzustellen.

2. Elektrohydraulische Steuervorrichtung nach Anspruch 1, wobei die Schaltventile elektrisch betätigt Sitzventile sind.

3. Elektrohydraulische Steuervorrichtung nach Anspruch 1 oder 2, wobei sich der maximale Durchflussvolumenstrom der dem Zulauf bzw. Ablauf zugeordneten Schaltventile (28, 30, 38, 40) unterscheidet, vorzugsweise um den Baktor 2.

4. Elektrohydraulische Steuervorrichtung nach einem der vorhergehenden Ansprüche, wobei die zulaufseitige Ventilunordnung (126) drei parallel geschaltete Schaltventile, (28, 30, 168) aufweist und die ablaufseitige Ventilanordnung (136) drei parallel geschaltete Schaltventile (38, 40; 170) aufweist, wobei die maximalen Durchflussvolumenströme von den jeweiligen drei parallel geschalteten Schaltventile ein Verhältnis von 4:2:1 haben.

5. Elektrohydraulische Steuervorrichtung nach einem der Ansprüche 1 bis 3, wobei die zulaufseitige Ventilanordnung (226) vier parallel geschaltete Schaltventile (28, 30, 168, 278) aufweist und die ablaufseitige Ventilanordnung (236) vier parallel geschaltete Schaltventile (38, 40, 170, 280) aufweist, wobei die maximalen Durchflussvolumenströme von den jeweiligen vier parallel geschalteten Schaltventile ein Verhältnis von 8:4:2:1 haben.

6. Elektrohydraulische Steuervorrichtung nach einem der vorhergehenden Ansprüche, wobei die kolbenstangenseitige Kammer (18) mit der Pumpe stromaufwärts von der zulaufseitigen ventilanordnung (26) in Druckmittelverbindung steht.

7. Elektrohydraulische Steuervorrichtung nach einem der vorhergehenden Anspruche, wobei die Schaltventile über einen Pulsweiten modulierte Strom mittels Feldbus (11) ansteuerbar sind.

8. Blektrohydraulische Steuervorrichtung nach einem der vorhergehenden Ansprüche, wobei der Feldbus (11) ein CAN-Bus ist.

## Claims

1. Electrohydraulic control device (8) for rotor blade adjustment m a wmd energy system visa a hydraulic cylinder (6) with a piston-side and a piston-rod-side chamber (20, 18),
having a valve arrangement (26, 126, 226) on the inlet side, via which a pressure medium connection between a pump and the piston-side chamber (20) can be set,
having a valve arrangement (36, 136, 236) on the outlet side, visa which a pressure medium connection between the piston-side chamber (20) and a tank (34) can be set,
**characterized by** the fact that
the valve arrangement on the inlet side has at least two switching valves (28, 30) connected m parallel and the valve arrangement on the outlet side has at least two switching valves (38, 40) connected m parallel, and the at least four switching valves can be controlled m different combinations m order to set the desired position of the hydraulic cylinder (6)

2. Electrohydraulic control device according to claim 1, wherein the switching valves are electrically actuated seat valves

3. Electrohydraulic control device according to claim 1 or 2, wherein the maximum volumetnc flow of the switching valves (28, 30, 38, 40) assigned to the inlet or the outlet differs, preferably by the factor 2.

4. Electrohydraulic control device according to any of the preceding claims, wherein the valve arrangement (126) on the mlet side has three switching valves (28, 30, 168) connected m parallel and the valve arrangement (136) on the outlet side has three switching valves (38, 40, 170) connected m parallel, the maximum volumetnc flows of the three switching valves connected m parallel m each case halving a ratio of 4 2:1

5. Electrohydraulic control device according to any of claims 1 to 3, wherein the valve arrangement (226) on the inlet side has four switching valves (28, 30, 168, 278) connected m parallel and the valve arrangement (236) on the outlet side has four switching valves (38, 40, 170, 280) connected m parallel, the maximum volumetric flows of the four switching valves connected m parallel m each case having a ratio of 8 4 2 1

6. Electrohydraulic control device according to any of the preceding claims, wherein the piston-rod-side chamber (18) is connected via pressure medium to the pump upstream of the valve arrangement (26) on the inlet side

7. Electrohydraulic control device according to any of the preceding claims, wherein the switching valves can be controlled via a pulse width modulated current by means of a field bus (11)

8. Electrohydraulic control device according to any of the preceding claims, wherein the fieldbus (11) is a CAN bus.

## Revendications

1. Dispositif (8) de commande électro-hydraulique pour régler l'inclinaison des pales d'une éolienne à l'aide d'un vérin (6) hydraulique doté de chambres (20, 18) côte piston et côté tige,
doté d'un dispositif de valves (26, 126, 226) côté alimentation permettant d'ajuster le débit dans une connexion de fluide de pression entre une pompe et la chambre (20) côté piston,
dote d'un dispositif de valves (36, 136, 236) côté évacuation permettant d'ajuster le débit dans une connexion de fluide de pression entre la chambre (20) côté piston et un réservoir (34),
**caractérisé en ce que**
le dispositif de valves côté alimentation présente au moins deux valves (28, 30) de commutation branchées en parallèle et le dispositif de valves côté évacuation présente au moins deux valves (38, 40) de commutation branchées en parallèle et les valves de commutation, qui sont au moins au nombre de quatre, peuvent être commandées dans des configurations différentes pour amener le vérin (6) hydraulique dans une position souhaitée

2. Dispositif de commande électro-hydraulique selon la revendications n° 1, **cependant que** les valves de commutation sont des valves à siège de clapet à commande électrique

3. Dispositif de commande électro-hydraulique selon la revendication n° 1 ou n° 2, **cependant que** les débits de passage maximaux des valves (28, 30, 38, 40) de commutation dédiées à l'alimentation et à l'évacuation se distinguent, de préférence d'un rapport 2

4. Dispositif de commande électro-hydraulique selon une des revendications précédentes, **cependant que** le dispositif (126) de valves côté alimentation présente trois valves (28, 30, 168) de commutation branchées en parallèle et le dispositif (136) de valves côté évacuation présente trois valves (38, 40, 170) de commutation branchées en parallèle, cependant que les débits de passage maximaux de ces trois valves de commutation branchées en parallèle présentent un rapport de 4 2 1 respectivement

5. Dispositif de commande électro-hydraulique selon une des revendications n° 1 à n° 3, **cependant que** le dispositif (226) de valves côté alimentation présente quatre valves (28, 30, 168, 278) de commutation branchées en parallèle et le dispositif (236) de valves côté évacuation présente quatre valves (38, 40, 170, 280) de commutation branchées en parallèle, cependant que les débits de passage maximaux de ces quatre valves de commutation branchées en parallèle présentent un rapport de 8:4:2:1 respectivement

6. Dispositif de commande électro-hydraulique selon une des revendications précédentes, **cependant que** la chambre (18) côté tige de vérin est raccordée par voie de fluide de pression à la pompe en amont du dispositif (26) de valves côté alimentation

7. Dispositif de commande électro-hydraulique selon une des revendication précédentes, **cependant que** les valves de commutation peuvent être commandées par courant à modulation de la largeur d'impulsion à l'aide d'un bus (11) de terrain.

8. Dispositif de commande électro-hydraulique selon une des revendications précédentes, **cependant que** le bus (11) de terrain est un bus de type CAN.
